# FASCICULE DE BREVET EUROPEEN

(11) **EP 3 626 844 B1**
(45) Date de publication et mention de la délivrance du brevet: **09.08.2023**
(21) Numéro de dépôt: 19197931.9
(22) Date de dépôt: 18.09.2019
(51) Int. Cl.: C22B 7/00, C22B 59/00

(54) **PROCÉDÉ DE RÉCUPÉRATION SÉLECTIVE D'AU MOINS UNE TERRE RARE PRÉSENTE DANS UN DÉCHET ET PROCÉDÉ DE VALORISATION D'UN DÉCHET LE METTANT EN OEUVRE**
VERFAHREN ZUR SELEKTIVEN RÜCKGEWINNUNG MINDESTENS EINER SELTENEN ERDE, DIE IN EINEM ABFALL ENTHALTEN IST, UND VALORISIERUNGSVERFAHREN EINES ABFALLS, BEI DEM DIESES VERFAHREN ANGEWENDET WIRD
METHOD FOR SELECTIVE RECOVERY OF AT LEAST ONE RARE EARTH PRESENT IN WASTE AND WASTE RECOVERY METHOD IMPLEMENTING SAME

(30) Priorité: 20.09.2018 FR 1858509
(43) Date de publication de la demande: 25.03.2020
(73) Titulaire: Commissariat à l'énergie atomique et aux énergies alternatives, 75015 Paris (FR)
(72) Inventeur: BILLY, Emmanuel, 38054 GRENOBLE CEDEX 09 (FR); BARTHELEMY, Sandrine, 38054 GRENOBLE CEDEX 09 (FR)
(74) Mandataire: Brevalex

(56) Documents cités:
- EP-A1- 0 790 322
- EP-A1- 2 444 507
- KR-A- 20170 056 870
- YANG XIULI ET AL: "Rare earth element recycling from waste nickel-metal hydride batteries", JOURNAL OF HAZARDOUS MATERIALS, ELSEVIER, AMSTERDAM, NL, vol. 279, 21 juillet 2014 (2014-07-21), pages 384-388, XP029056769, ISSN: 0304-3894, DOI: 10.1016/J.JHAZMAT.2014.07.027

## Description

### DOMAINE TECHNIQUE

La présente invention relève du domaine de la valorisation de déchets comprenant une ou plusieurs terres rares.

Plus spécifiquement, elle se rapporte à un procédé qui permet de récupérer, de manière sélective, au moins une terre rare présente dans un déchet.

L'invention se rapporte également à un procédé qui permet de valoriser un déchet comprenant au moins une terre rare, ce procédé mettant en oeuvre le procédé de récupération mentionné précédemment.

L'invention trouve notamment application dans la valorisation de piles nickel-hydrure métallique et d'accumulateurs électrochimiques (ou batteries) usagés ainsi que dans celle d'aimants permanents usagés ou rebutés, en particulier de type néodyme-fer-bore (ou NdFeB) ou samarium-cobalt (ou SmCo).

### ÉTAT DE LA TECHNIQUE ANTÉRIEURE

Un accumulateur nickel-hydrure métallique, noté NiMH, comprend une électrode positive à base d'hydroxyde de nickel (NiO(OH)/Ni(OH)₂) et une électrode négative qui sont isolées électriquement et physiquement par un séparateur (de type nylon) rempli d'un électrolyte concentré en hydroxyde de potassium KOH (à 8,7 mol/L).

L'électrode négative comprend un composé intermétallique hydrurable de type ABₙ (AB₅, AB₂, AB₃,...). Les composés, ou alliages, de type ABs sont les plus utilisés. Pendant longtemps, l'électrode négative a été formée en un composé bimétallique, du type NiLa₅. Mais, pour des raisons électrochimiques et économiques, le nickel a été multi-substitué par d'autres éléments (Mn, Al, Co, ...) et le lanthane a été remplacé par un mélange de terres rares, appelé "Mischmetal" et noté Mm, comprenant du lanthane (La), du cérium (Ce), du néodyme (Nd) et du praséodyme (Pr). Dans les applications industrielles, les électrodes négatives des accumulateurs NiMH sont de type (M m)Ni_{3,55}Mn_{0,4}Al_{0,3}Co_{0,75}.

Les quantités de métaux présents dans les batteries NiMH ont été évaluées par le Ministère de l'Énergie américain (*Critical Materials Strategy,* 2011) pour un ensemble de 28 modules de 1040 g chacun. Cela correspond au dispositif nécessaire (puissance, tension) au bon fonctionnement d'une Toyota Prius^{™} 2010 de troisième génération. Le Tableau 1 ci-dessous fait état des quantités de métaux présents dans les batteries NiMH en considérant deux hypothèses, l'une haute, correspondant aux quantités actuellement utilisées, et l'autre basse, correspondant à une technologie plus économe attendue dans les années à venir.

**Tableau 1**

| Éléments | Masse par batterie (kg) | |
|---|---|---|
| | Hypothèse haute | Hypothèse basse |
| Lanthane | 0,73 | 0,49 |
| Cérium | 1,03 | 0,69 |
| Néodyme | 0,31 | 0,20 |
| Praséodyme | 0,10 | 0,07 |
| Nickel | 3,20 | 2,13 |
| Cobalt | 0,66 | 0,44 |
| Manganèse | 0,34 | 0,23 |
| Aluminium | 0,13 | 0,09 |
| Total | 6,5 | 4,33 |

Pour des raisons évidentes, la récupération des terres rares mais également du nickel contenus dans les batteries NiMH usagées présente un intérêt indéniable, tant sur le plan économique, au regard du coût élevé des terres rares, que sur le plan environnemental. En effet, l'extraction des terres rares à partir des minerais nécessite de nombreuses étapes hydrométallurgiques pour la concentration de celles-ci et leur purification.

Un certain nombre de procédés a déjà été proposé pour le recyclage des terres rares présentes dans des batteries ou accumulateurs NiMH usagés.

Classiquement, ces batteries ou accumulateurs sont soumis, dans un premier temps, à des traitements physiques et/ou mécaniques, par exemple à des opérations de démantèlement et de broyage puis, dans un deuxième temps, à un traitement chimique en phase humide de type hydrométallurgique.

Le traitement chimique comprend une étape de dissolution (également appelée lixiviation) puis une ou plusieurs étapes de séparation, par précipitation et/ou par extraction liquide/liquide, des éléments métalliques.

L'étape de dissolution utilise généralement une solution aqueuse acide à un pH au voisinage de 0 pour obtenir la dissolution complète du déchet comprenant les terres rares.

Ainsi, le document US 5,429,887, ci-après référencé **[1],** décrit qu'après une étape de séparation des autres éléments formant la batterie NiMH de type ABs, 92 g de déchet constitué par les électrodes positive et négative ainsi que le séparateur en nylon sont introduits dans une solution d'acide chlorhydrique HCl à 4 mol/L (ce qui correspond à un pH de - 0,6), de préférence à la température ambiante. Lors de cette dissolution, se produisent la séparation des différents éléments constitutifs du déchet (électrode positive, électrode négative et séparateur) ainsi que la dissolution partielle de la poudre de type AB₅. Après une filtration permettant de retirer l'électrode positive ainsi que le substrat en nickel de l'électrode négative, les particules de poudre d'électrode négative non-dissoutes sont à nouveau introduites dans la solution d'HCl pour compléter la dissolution. La dissolution complète est obtenue au bout de 2 h au terme desquelles on obtient une solution qui comprend 19,4 g/L de terres rares, 7,9 g/L de cobalt, 0,09 g/L de fer et 50,2 g/L de nickel. Les terres rares sont ensuite sélectivement extraites par précipitation, de préférence en présence de phosphate.

En plus d'être réalisée en plusieurs sous-étapes, on observe que l'étape de dissolution du procédé du document **[1]** n'est pas sélective puisque les terres rares se retrouvent en solution avec d'autres éléments métalliques, en particulier avec le nickel. De surcroît, l'utilisation d'HCl à une très forte concentration engendre, pour la mise en oeuvre de l'étape de précipitation, une consommation importante de soude pour porter le pH de la solution à des valeurs comprises entre 1 et 4 et ainsi permettre la précipitation de sels de terres rares. De telles conditions de traitement peuvent s'avérer dangereuses pour l'homme et l'environnement.

Dans le document EP 2 444 507 A1, qui se rapporte à un procédé de recyclage de terres rares contenues dans un déchet tel qu'un accumulateur NiMH, l'étape de lixiviation du déchet est réalisée au moyen d'HCl, à une température comprise entre 0 °C et 100 °C et à un pH inférieur à 3, de préférence compris entre 0 et -1, pour solubiliser les métaux et maintenir, sous forme solide, les éléments non métalliques (graphite, plastique et autres matériaux organiques).

Le document EP 0 790 322, ci-après référencé **[2],** se rapporte à un procédé de récupération d'éléments de terres rares à partir d'un alliage de terres rares-nickel dans lequel l'étape de dissolution est partiellement sélective. Le procédé décrit par le document **[2]** comprend une étape consistant à préparer une suspension formée de particules de l'alliage de terres rares-nickel dans l'eau et à y introduire, sous agitation et à une température inférieure ou égale à 50 °C, une solution d'acide nitrique HNO₃ diluée de manière à maintenir le pH de la solution à une valeur supérieure ou égale à 5. Le temps de traitement est compris entre 5 h et 20 h. Ensuite, un sel tel qu'un fluorure ou un oxalate, est introduit pour former un sel insoluble de terres rares.

Si le procédé décrit par le document **[2]** présente l'avantage de mettre en oeuvre une solution moins concentrée en acide minéral que celle mise en oeuvre par le procédé décrit par le document **[1],** le choix de l'acide nitrique n'est pas sans inconvénients. En effet, et bien que le document **[2]** s'en défende, il y a un risque non négligeable que l'acide nitrique, par réduction des NO₃⁻, forme des oxydes d'azote, ou NOx, qui sont des composés qui, certes, améliorent le caractère oxydant de l'acide nitrique mais qui sont aussi dangereux pour l'homme et l'environnement. Par ailleurs, la température de l'étape de dissolution dépasse la température ambiante, ce qui a un coût énergétique. Enfin, la régulation du pH étant réalisée au moyen d'une solution diluée, les quantités de réactifs et de solvants, en particulier d'eau, utilisées dans ce procédé de récupération de l'art antérieur et, par conséquent, les volumes d'effluents à retraiter, s'en trouvent fortement augmentés.

La publication de K. Larsson et al. ("Dissolution and characterization of HEV NiMH batteries", Waste Management, 2013, 33, 689-698), ci-après référencée **[3],** fait état de résultats de dissolution d'une batterie NiMH après son démantèlement manuel. L'anode et la cathode sont séparées et des tests de dissolution sont réalisés pour une dissolution différenciée dans les acides nitrique HNO₃, sulfurique H₂SO₄ et chlorhydrique HCl, de préférence avec un gaz inerte. Le document **[3]** conclut que l'utilisation d'HCl ou d'H₂SO₄, à 30 °C et à pH supérieur ou égal à 1, est souhaitable pour la dissolution de la cathode, tandis que l'utilisation d'HNO₃ ou d'H₂SO₄, à pH supérieur ou égal à 3, est préconisée pour obtenir une dissolution complète et rapide de l'anode.

Le procédé de dissolution décrit par ce document **[3]** requiert donc la mise en oeuvre d'un gaz inerte mais surtout de conditions différentes pour la dissolution de l'anode et de la cathode. De telles contraintes rendent le procédé complexe et coûteux, difficilement compatible avec un recyclage des déchets à l'échelle industrielle.

Si les procédés de récupération qui viennent d'être décrits présentent des inconvénients de nature différente, ils ont tous en commun de conduire l'étape de dissolution sur l'électrode négative, ou anode, c'est-à-dire à partir d'un déchet du type accumulateur ou batterie qui a été préalablement démantelé. L'enseignement de chacun des documents **[1]** à **[3]** n'est donc que peu représentatif des problématiques industrielles.

Le but de la présente invention est donc de pallier les inconvénients mentionnés ci-dessus et de proposer un procédé de récupération d'au moins une terre rare contenue dans un déchet qui puisse être aisément transposable industriellement, tant sur le plan économique, avec un coût énergétique réduit, que sur le plan du respect de la santé humaine et de l'environnement.

Ce procédé doit, en particulier, pouvoir être mis en oeuvre, sous air et à température ambiante, et comprendre un nombre d'étapes qui soit le plus faible possible en ne recourant notamment pas, de manière systématique, à un démantèlement des éléments constitutifs du déchet du type batterie ou accumulateur usagé.

Ce procédé doit également pouvoir être mis en oeuvre dans des conditions qui soient les plus douces possibles, de manière à réduire les risques sanitaires et environnementaux, en limitant notamment le recours à des concentrations et à des quantités élevées de réactifs acides et basiques et, ce faisant, en diminuant les volumes d'effluents à retraiter.

### EXPOSÉ DE L'INVENTION

Les buts précédemment énoncés ainsi que d'autres sont atteints, en premier lieu, par un procédé de récupération sélective d'au moins une terre rare présente dans un déchet, ce procédé comprenant les étapes (a) à (d) successives suivantes de :
(a) dissolution du déchet sous forme divisée dans une solution aqueuse acide pour libérer la terre rare dans la phase liquide,
(b) recueil de la phase liquide,
(c) précipitation de la terre rare sous la forme d'un sulfate double de terre rare par introduction d'un sulfate dans la phase liquide recueillie à l'issue de l'étape (b), et
(d) recueil du précipité.

Selon l'invention, l'étape (a) de dissolution est réalisée par immersion et maintien, pendant un temps t, du déchet sous forme divisée dans une solution aqueuse S1 comprenant de l'acide chlorhydrique, la solution aqueuse S1 ayant un pH constant et égal à une valeur comprise entre 1,5 et 4,5 pendant le temps t.

L'expression *"compris entre* ... *et* ...", qui vient d'être utilisée pour définir l'intervalle de pH de la solution aqueuse S1 et qui est utilisée dans la suite de la présente demande, doit être comprise comme définissant non seulement les valeurs comprises dans cet intervalle, mais également la valeur de chacune des bornes de cet intervalle.

Par ailleurs, dans ce qui précède et ce qui suit, on entend par "terre(s) rare(s)", le ou les éléments que sont le scandium (Sc), l'yttrium (Y) ainsi que l'ensemble des lanthanides, ces derniers correspondant aux 15 éléments chimiques répertoriés dans le tableau périodique des éléments de Mendeleïev qui ont un numéro atomique compris entre 57 pour le lanthane (La) et 71 pour le lutécium (Lu).

Cette étape (a) de dissolution du procédé de récupération selon l'invention s'effectue dans une solution aqueuse S1 dont le pH est maintenu, pendant toute la durée de la dissolution, à une valeur qui est constante et qui est comprise entre 1,5 et 4,5, soit à une concentration d'HCl bien moins élevée que celle mise en oeuvre dans le procédé décrit par le document **[1].**

Or, les Inventeurs ont constaté que, de manière surprenante et inattendue, la mise en oeuvre d'une solution aqueuse d'HCl à un pH contrôlé et maintenu constant à une valeur comprise entre 1,5 et 4,5 permet d'obtenir, dans des conditions opératoires relativement douces, une dissolution partielle du déchet mais la dissolution sélective et totale des terres rares contenues dans ce déchet. Ainsi, dans le cas où le déchet est formé par un alliage à base de nickel et de terres rares, par exemple lorsqu'il provient d'un accumulateur du type NiMH, seules les terres rares sont dissoutes lors de cette étape (a), le nickel restant quant à lui sous forme solide. À l'issue de l'étape (a), on obtient donc une phase solide riche en nickel et une phase liquide comprenant les terres rares.

Ainsi, et contrairement aux procédés décrits par les documents **[1], [3]** et, dans une moindre mesure, **[2],** le procédé selon l'invention permet une dissolution sélective des terres rares dès l'étape (a) de dissolution.

La sélection de cet intervalle de valeurs de pH est particulièrement avantageuse. En effet, en mettant en oeuvre une solution aqueuse acide à un pH strictement supérieur à 4, on réduit la cinétique de dissolution et l'efficacité du procédé, tandis qu'un pH strictement inférieur à 1,5 fait perdre la sélectivité de dissolution des terres rares, les éléments métalliques autres que les terres rares et, notamment le nickel, le cobalt et le fer, étant alors également dissous.

Dans une version avantageuse de l'invention, la valeur du pH de la solution aqueuse S1 est comprise entre 2,5 et 3,5.

Dans une version préférée de l'invention, la valeur du pH de la solution aqueuse S1 est égale à 3.

Comme indiqué précédemment, la solution aqueuse S1 comprend de l'acide chlorhydrique HCl.

Bien que rien n'interdise le fait qu'elle puisse éventuellement comprendre un ou plusieurs autres acides minéraux, la solution aqueuse S1 ne comprend, de préférence, pas d'autre acide minéral qu'HCl. De la même manière, la solution aqueuse S1 ne comprend pas non plus d'agent oxydant, contrairement au procédé du document **[2].**

Comme on l'a déjà indiqué, l'étape (a) de dissolution est contrôlée par le pH de la solution aqueuse S1.

Ce pH doit effectivement être impérativement contrôlé et maintenu à une valeur constante et comprise entre 1,5 et 4,5 durant toute l'étape (a) de dissolution pour permettre la dissolution sélective de la ou des terres rares contenues dans le déchet.

Dans une variante avantageuse du procédé selon l'invention, le maintien à cette valeur constante du pH de la solution aqueuse S1 est assuré, pendant le temps t, par introduction d'une quantité adaptée d'une solution d'acide chlorhydrique.

Dans une variante préférentielle, la solution d'acide chlorhydrique qui assure ce maintien du pH de la solution aqueuse S1 pendant le temps t de l'étape (a) de dissolution présente une concentration molaire supérieure ou égale à 10 mol/L.

Ce faisant, on limite la quantité d'effluents à retraiter ainsi que les coûts de retraitement associés.

Dans une variante avantageuse du procédé selon l'invention, l'étape (a) de dissolution est réalisée dans des conditions atmosphériques, c'est-à-dire sous air et à température ambiante, ce qui limite là encore les coûts énergétiques ainsi que les coûts d'installation du procédé de récupération.

Il est précisé que, par température ambiante, on entend une température typiquement comprise entre 19 °C et 25 °C.

Dans une variante avantageuse du procédé selon l'invention, l'étape (a) de dissolution est conduite sous agitation de la solution aqueuse S1 à une vitesse comprise entre 100 tr/min et 1000 tr/min. Cette vitesse peut préférentiellement être de l'ordre de 800 tr/min.

Conformément à l'invention, lors de son immersion dans la solution aqueuse S1, le déchet se présente sous une forme divisée.

Dans une variante avantageuse, le déchet se présente sous la forme d'une poudre formée de particules dont la plus grande dimension est au plus égale à 500 µm, cette plus grande dimension étant, de préférence, comprise entre 20 µm et 500 µm. La taille des particules formant la poudre peut être déterminée par diffraction laser, par exemple au moyen d'un granulomètre à diffraction laser Mastersizer^{™} tel que commercialisé par la société Malvern Instruments.

Pour obtenir le déchet sous forme divisée et, en particulier, sous la forme d'une poudre formée de particules dont la plus grande dimension est au plus égale à 500 µm, le procédé de récupération selon l'invention peut avantageusement comprendre, en outre, les étapes (i) et (ii) successives suivantes de :
(i) application d'un traitement thermique au déchet, et
(ii) broyage du déchet pour obtenir le déchet sous forme divisée et, de manière optionnelle, tamisage du broyat,
les étapes (i) et (ii) étant mises en oeuvre préalablement à l'étape (a) de dissolution.

L'étape (i) de traitement thermique est avantageusement appliquée à l'accumulateur ou à la batterie, sans démantèlement. Cette étape (i) permet d'éliminer les solvants qui y sont contenus et, par conséquent, de mettre en sécurité l'accumulateur ou la batterie. Cette étape (i) permet donc de traiter un volume important de déchets en un minimum de temps, ce qui présente un intérêt majeur dans une approche industrielle. De surcroît, on augmente la concentration de déchets à traiter par litre de solution aqueuse acide.

Le traitement thermique appliqué lors de l'étape (i) peut notamment être conduit à une température comprise entre 300 °C et 1000°C et consister en une pyrolyse ou en une thermolyse.

L'étape (ii) de broyage peut notamment être réalisée au moyen d'un broyeur à couteaux et, le cas échéant, être suivie d'un tamisage du broyat, cette étape de tamisage permettant notamment de contrôler la granulométrie de la poudre broyée. Comme déjà indiqué précédemment, de manière avantageuse, les particules formant la poudre présentent une plus grande dimension d'au plus égale à 500 µm.

La mise en oeuvre des étapes (i) et (ii) permet d'obtenir une poudre dénommée "black mass" qui présente l'avantage d'être une poudre concentrée en terres rares (et notamment Ce, La et Nd) qui représentent environ 5 % des métaux, et en autres éléments métalliques tels que Co, Ni, Mn, Fe, Na, K, Al, étant précisé que Ni constitue l'élément métallique principal puisqu'il représente environ 50 % des métaux.

En outre, en augmentant la concentration de déchets à traiter par litre de solution aqueuse acide, il est possible d'effectuer un nombre plus important de cycles de récupération sans atteindre la limite de solubilité des terres rares en solution aqueuse d'HCl, en particulier pour un pH de solution aqueuse S1 de 3, ce qui n'est pas possible en solution aqueuse d'H₂SO₄.

Ainsi, à l'issue des étapes (i), (ii) et (a), on obtient un mélange formé par deux phases, une phase liquide correspondant à la phase aqueuse acide et dans laquelle les terres rares ont été dissoutes et une phase solide. Cette phase solide correspond au broyat qui a été obtenu à l'issue de l'étape (ii) et qui a été raffiné par la dissolution sélective des terres rares. Cette phase solide se caractérise donc par une teneur en nickel enrichie, supérieure à celle du broyat issu de l'étape (ii), ce qui augmente sa valeur ajoutée et favorise sa valorisation ultérieure. Le procédé selon l'invention permet donc de valoriser le nickel et ce, sans qu'il soit nécessaire de recourir à la mise en oeuvre d'étapes chimiques de dissolution et de précipitation.

Contrairement aux procédés de l'art antérieur qui réalisent la plupart du temps la dissolution totale du déchet, le procédé selon l'invention, dans lequel seule une dissolution partielle de la black mass est impliquée, permet de diminuer de plus de 85 % la quantité de solution aqueuse acide. Dans le même temps, on réduit d'autant la quantité d'effluents à retraiter et, ce faisant, l'impact économique et environnemental.

L'étape (b) de recueil de la phase liquide telle qu'obtenue à l'issue de l'étape (a) est classiquement réalisée par une séparation solide/liquide. Une telle séparation peut être réalisée par toute technique de séparation habituelle pour la séparation d'un solide et d'un liquide, telle que la filtration, la centrifugation...

Lors de l'étape (c) du procédé selon l'invention, on réalise la précipitation de la ou des terres rares présentes dans la phase liquide recueillie à l'issue de l'étape (b) sous la forme d'un sulfate double de terre(s) rare(s).

L'étape (c) de précipitation est réalisée par introduction d'un sulfate dans la phase liquide recueillie à l'issue de l'étape (b).

Lorsque le pH de la phase liquide telle qu'obtenue à l'issue des phases (a) et (b) est compris entre 2,5 et 4,5, il n'est pas nécessaire d'introduire de soude NaOH pour obtenir la précipitation, sous forme de sels insolubles, de la ou des terres rares.

Le fait de ne pas recourir à l'addition de soude, pour mettre en oeuvre l'étape (c) de précipitation des sels de terre(s) rare(s), concourt à la réduction de la consommation des réactifs. Ainsi, le procédé selon l'invention permet de réduire de plus de 70 % les quantités de réactifs (HCl et NaOH) et, ce faisant, permet de diminuer d'autant les volumes d'effluents à retraiter.

Dans une variante avantageuse, lors de l'étape (c), le pH de la phase liquide est compris entre 3 et 4.

Pour obtenir la précipitation des terres rares sous forme de sulfate double, on peut ajouter un sulfate métallique, avantageusement un sulfate de métal alcalin. En effet, la présence d'un sulfate de métal alcalin permet de diminuer la limite de solubilité des sulfates doubles de terres rares en solution aqueuse et, dans le cas où le déchet contient lui-même un ou des métaux alcalins, de favoriser la réactivité de ce déchet.

Dans une variante avantageuse, le sulfate de métal alcalin est le sulfate de sodium Na₂SO₄ ou le sulfate de potassium K₂SO₄. De préférence, le sulfate de métal alcalin est Na₂SO₄.

Pour la réalisation de l'étape (c) de précipitation, l'introduction d'une faible concentration de sulfate de sodium ou de potassium (0,2 mol/L), dans la phase liquide, permet la précipitation sélective des terres rares, notées ci-après sous l'acronyme "TR", sous la forme de NaTR(SO₄)₂.xH₂O ou KTR(SO₄)₂.xH₂O.

Après l'étape (c) de précipitation, on réalise l'étape (d) de recueil du précipité par une séparation solide/liquide. Comme pour l'étape (b), cette séparation peut être réalisée par toute technique de séparation habituelle pour la séparation d'un solide et d'un liquide, telle que la filtration, la centrifugation...

Les analyses du précipité recueilli à l'issue de l'étape (d) montrent que plus de 95 %, voire même plus de 98 %, de la quantité totale des terres rares contenues dans le déchet sous forme divisée ont précipité. Ce taux est donc particulièrement élevé, même dans le cas où le déchet est formé par un accumulateur ou une batterie qui n'a pas été démantelé au préalable et qui a été soumis aux étapes (i) de traitement thermique et (ii) de broyage, c'est-à-dire par un déchet dont la composition chimique est très nettement différente de celle des dispositifs sur lesquels ont été conduits les procédés décrits par les documents [1] à [3].

L'invention se rapporte, en deuxième lieu, à un procédé de valorisation d'un déchet comprenant au moins une terre rare.

Selon l'invention, ce procédé comprend les étapes (1) à (3) successives suivantes de :
(1) récupération de la terre rare sous la forme d'un précipité de sulfate double de terre rare par la mise en oeuvre du procédé de récupération sélective d'au moins une terre rare tel que défini ci-dessus,
(2) dissolution du précipité de sulfate double de terre rare dans une solution aqueuse S2 comprenant de l'acide oxalique, moyennant quoi on obtient un précipité d'oxalate de terre rare, et
(3) recueil du précipité d'oxalate de terre rare.

Lors de l'étape (1), on récupère la terre rare contenue dans le déchet par la mise en oeuvre des étapes successives (a) à (d) telles que définies précédemment, l'étape (a) étant, le cas échéant, précédée des étapes (i) et (ii), étant précisé que les caractéristiques avantageuses de chacune de ces étapes (i), (ii), (a), (b), (c) et (d) peuvent être prises seules ou en combinaison.

À l'issue de l'étape (1), on recueille un précipité de sulfate double de terre rare.

Pour convertir ce sulfate double de terre rare en oxalate de terre rare, on met en oeuvre l'étape (2) consistant à dissoudre ce précipité de sulfate double de terre rare dans une solution aqueuse S2 comprenant de l'acide oxalique. Cette étape (2) permet non seulement de convertir le sulfate double en oxalate mais également, et simultanément, d'extraire les éléments métalliques résiduels autres que les terres rares.

Dans une variante avantageuse du procédé de valorisation selon l'invention, la concentration molaire d'acide oxalique dans la solution aqueuse S2 est comprise entre 0,01 mol/L et 0,5 mol/L.

La sélection de cet intervalle de concentration molaire d'acide oxalique est particulièrement avantageuse. En effet, une concentration molaire d'acide oxalique inférieure à 0,01 mol/L diminue le pouvoir de conversion des sulfates doubles de terres rares en oxalates de terres rares tandis qu'une concentration molaire d'acide oxalique supérieure à 0,5 mol/L présente un faible bénéfice pour cette conversion tout en augmentant drastiquement les risques de voir le nickel ainsi que des éléments métalliques autres que les terres rares précipiter sous la forme d'oxalates, conjointement avec la ou les terres rares.

De manière particulièrement avantageuse, la concentration molaire d'acide oxalique dans la solution aqueuse S2 est égale à 0,2 mol/L.

Par ailleurs, le rapport entre la masse de précipité de sulfate double et le volume de solution aqueuse S2, ou rapport kg_{solide/}L_{liquide}, est avantageusement compris entre 1 % et 5 % et est, de préférence, égal à 2,5 %.

L'étape (2) de dissolution est avantageusement mise en oeuvre à une température comprise entre 20 °C et 80 °C et, de préférence, égale à 50 °C.

Cette étape (2) de dissolution est avantageusement réalisée sous agitation, pendant une durée qui peut être comprise entre 1 h et 4 h et, de préférence, pendant une durée de 2 h.

L'étape (3) de recueil du précipité d'oxalate de terre rare tel qu'obtenu à l'issue de l'étape (2) est classiquement réalisée par une séparation solide/liquide, qui peut être réalisée par toute technique de séparation habituelle pour la séparation d'un solide et d'un liquide, telle que la filtration, la centrifugation...

De manière optionnelle, l'étape (3) peut être suivie par une étape (4) de calcination du précipité d'oxalate de terre rare pour l'obtention d'un oxyde de terre rare.

Dans une variante avantageuse du procédé de valorisation selon l'invention, cette étape (4) de calcination est réalisée à une température comprise entre 800 °C et 1000 °C et, avantageusement, égale à 900 °C.

Cette étape (4) de calcination est avantageusement réalisée sous air, pendant une durée qui peut être comprise entre 1 h et 5 h et, de préférence, pendant une durée de 2 h.

Dans le cadre de la présente invention, qu'il s'agisse du procédé de récupération sélective d'au moins une terre rare présente dans un déchet ou bien du procédé de valorisation d'un déchet comprenant au moins une terre rare, le déchet peut être formé par tout type d'alliages métalliques comprenant au moins une terre rare et, comme autre élément métallique, du nickel.

Selon un aspect avantageux de l'invention, ce déchet est une pile nickel-hydrure métallique usagée, un accumulateur électrochimique nickel-hydrure métallique usagé ou encore un aimant permanent usagé ou rebuté, notamment de type NdFeB ou Sm-Co.

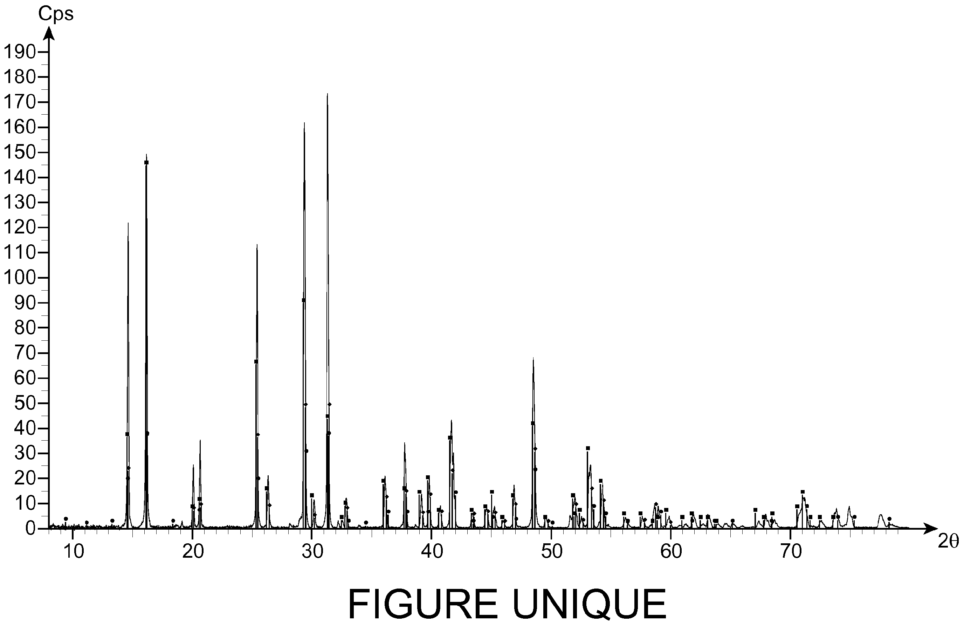

L'invention sera mieux comprise à la lumière du complément de description qui suit et qui se réfère à l'unique figure annexée.

Il est précisé que ce complément de description n'est donné qu'à titre d'illustration de l'objet de l'invention et qu'il ne doit en aucun cas être interprété comme une limitation de cet objet.

### BRÈVE DESCRIPTION DE LA FIGURE

La figure unique représente le diffractogramme de rayons X (DRX) du précipité de sulfates doubles obtenu dans le mode de réalisation particulier du procédé de récupération de terres rares selon l'invention décrit ci-après.

### EXPOSÉ DÉTAILLÉ D'UN MODE DE MISE EN ŒUVRE PARTICULIER

L'exemple qui suit porte sur la mise en oeuvre du procédé conforme à l'invention pour la récupération sélective de terres rares présentes dans un déchet de batterie de type NiMH.

### 1. Réduction du déchet sous forme divisée, à l'état de poudre

La batterie NiMH est tout d'abord soumise à un traitement thermique par pyrolyse réductrice, conduite à une température comprise entre 400 °C et 1000°C, pour éliminer l'électrolyte qu'elle renferme et sécuriser cette batterie.

Après l'étape de traitement thermique, la batterie est soumise à un traitement mécanique de broyage puis à un traitement mécanique de tamisage pour obtenir une poudre, ou "black mass", concentrée en terres rares et autres éléments métalliques (notamment Ni, Fe, Cr, Co et Mn).

À l'issue des traitements thermique et mécaniques, la poudre se présente sous la forme de particules dont la plus grande des trois dimensions ne dépasse pas 500 µm et se caractérise par la composition en éléments métalliques qui figure dans le Tableau 2 ci-dessous, cette composition étant déterminée par une analyse par spectrométrie à plasma à couplage inductif (ICP) sur un échantillon de poudre dissous dans de l'eau régale.

**Tableau 2**

| Composition en éléments métalliques (en % massique) | | | | | |
|---|---|---|---|---|---|
| Ni | Terres rares | Fe | Cr | Co | Mn |
| 50 | 5 | 5 | 16 | 8 | 1 |

### 2. Récupération des terres rares présentes dans la poudre

### 2.1. Dissolution des terres rares présentes dans la poudre

7,5 g de poudre préparée conformément au paragraphe 1. ci-dessus sont immergés dans 50 mL d'une solution aqueuse comprenant de l'acide chlorhydrique et présentant un pH de 3 (soit un rapport masse de poudre (en g) / volume de liquide (en mL) de 15 %).

La solution aqueuse comprenant la poudre est placée et maintenue sous agitation à 800 tr/min, sous air atmosphérique et à une température de 20 °C, pendant 6 h au terme desquelles la poudre est dissoute. Pendant cette durée de 6 h, le pH de la solution aqueuse est maintenu constant à une valeur de 3 par ajout de quantités adaptées d'une solution d'acide chlorhydrique concentrée à 12 mol/L.

On procède alors à une séparation des phases solide et liquide.

Un échantillon de la solution aqueuse ou phase liquide obtenue au terme des 6 h est soumis à une analyse par spectrométrie à plasma à couplage inductif (ICP). Le rendement de dissolution (en %) de chacun des éléments métalliques est rapporté dans le Tableau 3 ci-dessous.

**Tableau 3**

| Rendement de dissolution (%) | | | | | |
|---|---|---|---|---|---|
| Ni | Terres rares | Fe | Cr | Co | Mn |
| 3 | 100 | 21 | 2 | 16 | 61 |

Les résultats du Tableau 3 montrent que la dissolution a permis l'extraction complète des terres rares. Par contre, seulement 3 % du nickel présent dans la poudre ont été dissous dans la solution aqueuse.

### 2.2. Précipitation des terres rares présentes dans la solution aqueuse

On ajoute du sulfate de sodium Na₂SO₄ à 0,2 mol/L à la solution aqueuse telle qu'obtenue au terme des 6 h, en maintenant toujours le pH de cette solution aqueuse à 3. Ce faisant, on obtient la précipitation complète et sélective des terres rares, sous la forme de sulfates doubles de terres rares.

Le précipité est ensuite récupéré par filtration.

Ce précipité est soumis à une mesure par diffractométrie de rayons X (DRX). Le diffractogramme correspondant est reporté sur la figure unique annexée. Ce diffractogramme révèle la présence du lanthane et du cérium, avec des pics à 2θ = 14 et 2θ = 16, mais pas celle du néodyme, ce qui s'explique par la faible teneur en néodyme dans le déchet de batterie de type NiMH soumis au procédé de récupération selon l'invention.

La composition de ce précipité a également été analysée par spectrométrie à plasma à couplage inductif (ICP) sur un échantillon de ce précipité préalablement dissous dans de l'eau régale. Les résultats de cette analyse chimique sont reportés dans le Tableau 4 ci-dessous, étant précisé que le symbole (*) signifie que la présence de l'élément métallique concerné n'a pu être déterminée.

**Tableau 4**

| Composition en éléments métalliques (en % massique) | | | | | | | | |
|---|---|---|---|---|---|---|---|---|
| La | Ce | Nd | Ni | Mn | Co | Cr | Fe | Al |
| 35,19 | 50,14 | 14,57 | 0,01 | 0,01 | 0,01 | 0,003 | 0,004 | (*) |

L'analyse chimique confirme donc bien la présence du néodyme dans le précipité.

Cette analyse chimique met, en outre, en évidence le fait que le précipité obtenu comprend une proportion massique de 99,90 % de sels de terres rares, ce qui traduit une sélectivité particulièrement performante du procédé de récupération d'au moins une terre rare conforme à l'invention.

### BIBLIOGRAPHIE

**[1]** US 5,429,887 A
**[2]** EP 0 790 322 A1
**[3]** K. Larsson et al., Waste Management, 2013, 33, pages 689-698

## Revendications

1. Procédé de récupération sélective d'au moins une terre rare présente dans un déchet, qui comprend les étapes (a) à (d) successives suivantes de :
(a) dissolution du déchet sous forme divisée dans une solution aqueuse acide pour libérer la terre rare dans la phase liquide,
(b) recueil de la phase liquide,
(c) précipitation de la terre rare sous la forme d'un sulfate double de terre rare par introduction d'un sulfate dans la phase liquide recueillie à l'issue de l'étape (b), et
(d) recueil du précipité,
**caractérisé en ce que** l'étape (a) de dissolution est réalisée par immersion et maintien, pendant un temps t, du déchet sous forme divisée dans une solution aqueuse S1 comprenant de l'acide chlorhydrique, la solution aqueuse S1 ayant un pH constant et égal à une valeur comprise entre 1,5 et 4,5 pendant le temps t.

2. Procédé selon la revendication 1, dans lequel la valeur du pH de la solution aqueuse S1 est comprise entre 2,5 et 3,5 et est, avantageusement, égale à 3.

3. Procédé selon la revendication 1 ou 2, dans lequel le déchet est sous la forme d'une poudre formée de particules dont la plus grande dimension est au plus égale à 500 µm.

4. Procédé selon l'une quelconque des revendications 1 à 3, comprenant, en outre, les étapes (i) et (ii) successives suivantes de :
(i) application d'un traitement thermique au déchet, et
(ii) broyage du déchet pour obtenir le déchet sous forme divisée et, de manière optionnelle, tamisage du broyat,
les étapes (i) et (ii) étant mises en oeuvre préalablement à l'étape (a) de dissolution.

5. Procédé selon l'une quelconque des revendications 1 à 4, dans lequel, lors de l'étape (a), la solution aqueuse S1 ne comprend pas d'autre acide.

6. Procédé selon l'une quelconque des revendications 1 à 5, dans lequel, lors de l'étape (a), le maintien à cette valeur constante du pH de la solution aqueuse S1 est assuré, pendant le temps t, par introduction d'une quantité adaptée d'une solution d'acide chlorhydrique, de préférence de concentration molaire supérieure ou égale à 10 mol/L.

7. Procédé selon l'une quelconque des revendications 1 à 6, dans lequel l'étape (a) est réalisée sous air et à température ambiante, avantageusement sous agitation de la solution aqueuse S1 à une vitesse comprise entre 100 tr/min et 1000 tr/min.

8. Procédé selon l'une quelconque des revendications 1 à 7, dans lequel, lors de l'étape (c), le pH de la phase liquide est compris entre 3 et 4.

9. Procédé selon l'une quelconque des revendications 1 à 8, dans lequel le sulfate est un sulfate de métal alcalin, de préférence un sulfate de sodium ou de potassium.

10. Procédé de valorisation d'un déchet comprenant au moins une terre rare, qui comprend les étapes (1) à (3) et, le cas échéant (4), successives suivantes de :
(1) récupération de la terre rare sous la forme d'un précipité de sulfate double de terre rare par le procédé selon l'une quelconque des revendications 1 à 9,
(2) dissolution du précipité de sulfate double de terre rare dans une solution aqueuse S2 comprenant de l'acide oxalique, moyennant quoi on obtient un précipité d'oxalate de terre rare,
(3) recueil du précipité d'oxalate de terre rare, et
de manière optionnelle,
(4) calcination du précipité d'oxalate de terre rare, moyennant quoi on obtient un oxyde de terre rare.

11. Procédé selon la revendication 10, dans lequel la concentration molaire d'acide oxalique dans la solution aqueuse S2 est comprise entre 0,01 mol/L et 0,5 mol/L et est, avantageusement, égale à 0,2 mol/L.

12. Procédé selon la revendication 10 ou 11, dans lequel l'étape (2) est réalisée à une température comprise entre 20 °C et 80 °C et, avantageusement, égale à 50 °C.

13. Procédé selon l'une quelconque des revendications 10 à 12, dans lequel l'étape (4) est réalisée à une température comprise entre 800 °C et 1000°C et, avantageusement, égale à 900 °C.

14. Procédé selon l'une quelconque des revendications 1 à 13, dans lequel le déchet est une pile nickel-hydrure métallique usagée, un accumulateur électrochimique nickel-hydrure métallique usagé ou un aimant permanent usagé ou rebuté.

## Patentansprüche

1. Verfahren zur selektiven Rückgewinnung von mindestens einer in einem Abfall vorhandenen Seltenen Erde, das die folgenden aufeinanderfolgenden Schritte (a) bis (d) umfasst:
(a) Auflösung des Abfalls in geteilter Form in einer sauren wässrigen Lösung, um die Seltene Erde in der flüssigen Phase freizusetzen,
(b) Sammlung der flüssigen Phase,
(c) Ausfällung der Seltenen Erde in Form eines Seltenerddoppelsulfats durch Einführen eines Sulfats in die nach Schritt (b) gesammelte flüssige Phase, und
(d) Sammlung des Niederschlags,
**dadurch gekennzeichnet, dass** der Schritt (a) der Auflösung durch Eintauchen und Halten des Abfalls in geteilter Form in einer wässrigen Lösung S1, die Salzsäure umfasst, während einer Zeit t durchgeführt wird, wobei die wässrige Lösung S1 einen konstanten pH-Wert aufweist, der während der Zeit t gleich einem Wert zwischen 1,5 und 4,5 ist.

2. Verfahren nach Anspruch 1, wobei der pH-Wert der wässrigen Lösung S1 zwischen 2,5 und 3,5 liegt und vorteilhafterweise gleich 3 ist.

3. Verfahren nach Anspruch 1 oder 2, wobei der Abfall in Form eines Pulvers vorliegt, das aus Partikeln gebildet wird, deren größte Abmessung höchstens gleich 500 µm ist.

4. Verfahren nach einem der Ansprüche 1 bis 3, das außerdem die folgenden aufeinanderfolgenden Schritte (i) und (ii) umfasst:
(i) Anwendung einer Wärmebehandlung auf den Abfall und
(ii) Zerkleinerung des Abfalls, um den Abfall in geteilter Form zu erhalten, und optional Siebung des Zerkleinerungsguts,
wobei die Schritte (i) und (ii) vor dem Schritt (a) der Auflösung durchgeführt werden.

5. Verfahren nach einem der Ansprüche 1 bis 4, wobei die wässrige Lösung S1 in Schritt (a) keine weitere Säure enthält.

6. Verfahren nach einem der Ansprüche 1 bis 5, wobei in Schritt (a) die Aufrechterhaltung dieses konstanten Werts des pH-Werts der wässrigen Lösung S1 während der Zeit t durch Zuführung einer geeigneten Menge einer Salzsäurelösung, vorzugsweise mit einer molaren Konzentration gleich oder höher als 10 mol/L, gewährleistet wird.

7. Verfahren nach einem der Ansprüche 1 bis 6, wobei Schritt (a) unter Luft und bei Raumtemperatur durchgeführt wird, vorteilhafterweise unter Rühren der wässrigen Lösung S1 mit einer Geschwindigkeit zwischen 100 U/min und 1000 U/min.

8. Verfahren nach einem der Ansprüche 1 bis 7, wobei in Schritt (c) der pH-Wert der flüssigen Phase zwischen 3 und 4 liegt.

9. Verfahren nach einem der Ansprüche 1 bis 8, wobei das Sulfat ein Alkalimetallsulfat, vorzugsweise ein Natrium- oder Kaliumsulfat ist.

10. Verfahren zur Verwertung eines Abfalls, der mindestens eine Seltene Erde enthält, das die folgenden aufeinanderfolgenden Schritte (1) bis (3) und ggf. (4) umfasst:
(1) Rückgewinnung der Seltenen Erde in Form eines Niederschlags aus Seltenerddoppelsulfat durch das Verfahren nach einem der Ansprüche 1 bis 9,
(2) Auflösung des Niederschlags aus Seltenerddoppelsulfat in einer wässrigen Lösung S2, die Oxalsäure umfasst, wodurch ein Seltenerdoxalatniederschlag erhalten wird,
(3) Sammlung des Seltenerdoxalatniederschlags und optional
(4) Kalzinierung des Seltenerdoxalatniederschlags, wodurch ein Seltenerdoxid erhalten wird.

11. Verfahren nach Anspruch 10, wobei die molare Konzentration von Oxalsäure in der wässrigen Lösung S2 zwischen 0,01 mol/L und 0,5 mol/L liegt und vorzugsweise gleich 0,2 mol/L ist.

12. Verfahren nach Anspruch 10 oder 11, wobei Schritt (2) bei einer Temperatur zwischen 20 °C und 80 °C und vorzugsweise gleich 50 °C durchgeführt wird.

13. Verfahren nach einem der Ansprüche 10 bis 12, wobei Schritt (4) bei einer Temperatur zwischen 800 °C und 1000°C und vorzugsweise bei 900 °C durchgeführt wird.

14. Verfahren nach einem der Ansprüche 1 bis 13, wobei es sich bei dem Abfall um eine gebrauchte Nickel-Metallhydrid-Batterie, einen gebrauchten elektrochemischen Nickel-Metallhydrid-Akkumulator oder einen gebrauchten oder ausrangierten Permanentmagneten handelt.

## Claims

1. A method for selective recovery of at least one rare earth present in waste, which comprises the following successive steps (a) to (d) consisting in:
(a) dissolving the waste in divided form in an acidic aqueous solution to release the rare earth in the liquid phase,
(b) collecting the liquid phase,
(c) precipitating the rare earth in the form of a rare earth double sulphate by introducing a sulphate into the liquid phase collected at the end of step (b), and
(d) collecting the precipitate,
**characterised in that** the dissolution step (a) is carried out by immersing and maintaining, for a time t, the waste in divided form in an aqueous solution S1 comprising hydrochloric acid, the aqueous solution S1 having a pH which is constant and equal to a value comprised between 1.5 and 4.5 during the time t.

2. The method according to claim 1, wherein the pH value of the aqueous solution S1 is comprised between 2.5 and 3.5 and is advantageously equal to 3.

3. The method according to claim 1 or 2, wherein the waste is in the form of a powder formed of particles whose largest dimension is at most equal to 500 µm.

4. The method according to any one of claims 1 to 3, further comprising the following successive steps (i) and (ii) consisting in:
(i) applying a heat treatment to the waste, and
(ii) crushing the waste to obtain the waste in divided form and, optionally, sieving of the crushed material,
steps (i) and (ii) being implemented prior to the dissolution step (a).

5. The method according to any one of claims 1 to 4, wherein, during step (a), the aqueous solution S1 does not comprise any other acid.

6. The method according to any one of claims 1 to 5, wherein, during step (a), maintaining the aqueous solution S1 at this constant pH value is ensured, during the time t, by introducing a suitable amount of a hydrochloric acid solution, preferably of molar concentration which is higher or equal to 10 mol/L.

7. The method according to any one of claims 1 to 6, wherein step (a) is carried out in air and at ambient temperature, advantageously with stirring of the aqueous solution S1 at a speed comprised between 100 rpm and 1000 rpm.

8. The method according to any one of claims 1 to 7, wherein, during step (c), the pH of the liquid phase is comprised between 3 and 4.

9. The method according to any one of claims 1 to 8, wherein the sulphate is an alkali metal sulphate, preferably a sodium or potassium sulphate.

10. A method for recovering a waste comprising at least one rare earth, which comprises the following successive steps (1) to (3) and, where appropriate (4), consisting in:
(1) recovering the rare earth in the form of a rare earth double sulphate precipitate by the method according to any one of claims 1 to 9,
(2) dissolving the rare earth double sulphate precipitate in an aqueous solution S2 comprising oxalic acid, whereby a rare earth oxalate precipitate is obtained,
(3) collecting the rare earth oxalate precipitate, and
optionally,
(4) calcining the rare earth oxalate precipitate, whereby a rare earth oxide is obtained.

11. The method according to claim 10, wherein the molar concentration of oxalic acid in the aqueous solution S2 is comprised between 0.01 mol/L and 0.5 mol/L and, advantageously, equal to 0.2 mol/L.

12. The method according to claim 10 or 11, wherein step (2) is carried out at a comprised temperature between 20°C and 80°C and, advantageously, equal to 50°C.

13. The method according to any one of claims 10 to 12, wherein step (4) is carried out at a temperature comprised between 800°C and 1000°C and, advantageously, equal to 900°C.

14. The method according to any one of claims 1 to 13, wherein the waste is a used nickel-metal hydride battery, a used electrochemical nickel-metal hydride accumulator or a used or scrapped permanent magnet.
